(19)

Europäisches
Patentamt

European
Patent Office

Office européen
des brevets

(11) **EP 4 156 595 A1**

(12) **EUROPEAN PATENT APPLICATION**

(43) Date of publication:
**29.03.2023   Bulletin 2023/13**

(21) Application number: **22184609.0**

(22) Date of filing: **13.07.2022**

(51) International Patent Classification (IPC):
**H04L 9/08** (2006.01)        **H04L 9/30** (2006.01)
**H04L 9/32** (2006.01)

(52) Cooperative Patent Classification (CPC):
**H04L 9/0852; H04L 9/0825; H04L 9/3093;
H04L 9/3247;** H04L 2209/122

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **24.09.2021   US 202117484820**

(71) Applicant: **INTEL Corporation
Santa Clara, CA 95054 (US)**

(72) Inventors:
• **Basso, Andrea
  London W6 7QQ (GB)**
• **Ghosh, Santosh
  Hillsboro 97124 (US)**
• **Sastry, Manoj
  Portland 97229 (US)**

(74) Representative: **Goddar, Heinz J.
Boehmert & Boehmert
Anwaltspartnerschaft mbB
Pettenkoferstrasse 22
80336 München (DE)**

(54) **COMBINED POST-QUANTUM SECURITY UTILIZING REDEFINED POLYNOMIAL CALCULATION**

(57)     Combined post-quantum security utilizing redefined polynomial calculation is described. An example of an apparatus includes a first circuit for key encapsulation operation; a second circuit for digital signature operation; and a NTT (Number Theoretic Transform) multiplier circuit, wherein the NTT multiplier circuit provides for polynomial multiplication for both the first circuit and the second circuit, wherein the apparatus is to remap coefficients of polynomials for the first circuit to a prime modulus for the second circuit, and perform polynomial multiplication for the first circuit utilizing the remapped coefficients of the polynomials for the first circuit.

FIG. 1

EP 4 156 595 A1

## Description

TECHNICAL FIELD

Embodiments described herein generally relate to the field of electronic devices and, more particularly, combined post-quantum security utilizing redefined polynomial calculation.

BACKGROUND

Quantum computing is expected to enable attackers to solve problems that were previously impractical to attempt, including the solving of cryptographic mathematics. Attacks may utilize side channels to obtain signals from cryptographic computation, and apply quantum computing to determine secret values. As a result, any existing cryptographic methods may potentially be broken.

Crystals-Dilithium is a lattice based post-quantum digital signature protocol that is a finalist in the National Institute of Standards and Technology (NIST) Post-Quantum Cryptography (PQC) standardization competition. Further, Saber for public key encapsulation/KEM is also based on lattice calculation. The fundamental calculation is such technology is polynomial calculation. For example, for secret sharing (TLS) key encapsulation to generate a ciphertext and to communicate the ciphertext over the unsecure channel a party is required to utilize the digital signature.

However, the requirements for such digital signature and public key encapsulation technologies are not consistent, and thus in a conventional implementation each of such operations needs to be supported separately.

BRIEF DESCRIPTION OF THE DRAWINGS

Embodiments described here are illustrated by way of example, and not by way of limitation, in the figures of the accompanying drawings in which like reference numerals refer to similar elements.

FIG. 1 is a high level illustration of a system or apparatus to provide digital signature and key encapsulation operations, according to some embodiments;

FIG. 2 is an illustration of an NTT algorithm operation that may be utilized in both digital signature and key encapsulation operations, according to some embodiments;

FIG. 3 is an illustration of remapping of coefficients for a Saber key encapsulation process for operation with an NTT-based multiplier, according to some embodiments;

FIG. 4 is an illustration of a process for key encapsulation according to some embodiments;

FIG. 5 is an illustration of details for a process for key encapsulation, according to some embodiments; and

FIG. 6 illustrates an embodiment of an exemplary computing architecture for operations including combined post-quantum security utilizing redefined polynomial calculation, according to some embodiments.

DETAILED DESCRIPTION

Embodiments described herein are directed to combined post-quantum security utilizing redefined polynomial calculation.

Public key cryptography, also referred to as asymmetric cryptography, is in general a cryptographic system that uses pairs of keys in encryption, the pairs including public keys that may be publicly known and private keys that are securely maintained and only known by the key owner. The key pairs are generated utilizing cryptographic algorithms that are based on difficult mathematical problems.

It is expected that classical public-key cryptography, such as Elliptic Curve Cryptography (ECC), Elliptic Curve Digital Signature Algorithm (ECDSA), Diffie-Hellman (DH), Rivest Shamir Adleman (RSA), Digital Signature Algorithm (DSA), will be broken by quantum computers, referring to computers that exploit properties of quantum states to perform computation. Further, adversaries may be currently mining data from cryptographic operations to implement when sufficient quantum computing technology is available.

For this reason, Post-Quantum Cryptography (PQC) Standardization is a program and competition by the National Institute of Standards and Technology (NIST) to update their standards to include post-quantum cryptography. NIST PQC finalist candidates Dilithium (Dilithium-Lattice) for digital signature and Saber for Key Encapsulation Mechanism (KEM) are based on lattice technology. The fundamental computation in the lattice technology is polynomial multiplication (including more than 50% of computation time), where polynomial-coefficients are defined with a prime modulus.

The requirements for such digital signature and public key encapsulation technologies are not consistent, and thus in a conventional implementation each of such operations needs to be supported separately. Dilithium includes a 23-bit prime modulus, the prime modulus for Dilithium being $q = 2^{23} - 2^{13} + 1$, while Saber operates with a non-prime modulus $n = 2^{13}$.

More specifically, Dilithium requires an NTT (Number Theoretic Transform)-based multiplier, as specified by the relevant protocol. An NTT algorithm transforms a polynomial a(x) into its NTT form ã(x). Following such transformation, multiplication between polynomials in the NTT form corresponds to coefficient-wise multiplication between polynomials in the NTT form. Thus, it is possible to compute the product between a(x) and b(x) as INTT(NTT(a(x)) × NTT(b(x))), where INTT denotes the inverse NTT (i.e. INTT(NTT(a)) = a) and x × y denotes the coefficient-wise multiplication between x and y.

In some embodiments, an apparatus, system, or process is to provide support for both digital signature technology, such as utilizing Dilithium, and key encapsulation technology, such as utilizing Saber, through application of NTT-based processing. In this matter, an embodiment allows for reduction in required circuit elements, while maintaining sufficient accuracy for both security processes.

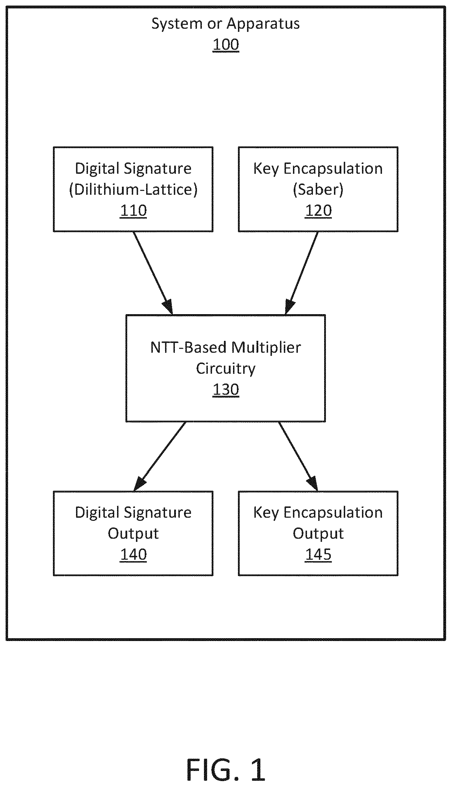

**FIG. 1** is a high level illustration of a system or apparatus to provide digital signature and key encapsulation operations, according to some embodiments. An apparatus or system 100 may include a processor, processing accelerator, or other circuitry to enable secure operations, and in particular post-quantum security technology.

In some embodiments, the apparatus or system 100 includes at least circuitry for digital signature operation 110, which may specifically include one or more circuit blocks to provide Dilithium digital signature operation, and circuitry for key encapsulation operation 120, which may specifically include one or more circuit blocks to provide Saber key encapsulation operation.

In some embodiments, the apparatus or system 100 includes circuitry for NTT and INTT operation 130, wherein the apparatus or system 100 is to apply the NTT/INTT multiplier circuitry to support both operation of the digital signature circuitry 110 and operation of the key encapsulation circuitry 120. In some embodiments, the apparatus or system, or process is to apply the NTT-based multiplier circuitry (referring to a multiplier including NTT and INTT operation) for both digital signature operation, such as in Dilithium technology, and for key encapsulation operation, such as in Saber technology.

In some embodiments, the key encapsulation circuitry 120 is adapted to the NTT-based multiplier through remapping of the coefficients with a larger modulus to prevent errors. As further described herein, the required modulus size may be reduced to 24 bits using signed logic. In some embodiments, an NTT-based multiplier with 23-bit Dilithium modulus $q = 2^{23} - 2^{13} + 1$ computes erroneous result with extremely negligible probability (at security level 3, $p = 2^{-2045}$), and NTT-based multiplier 130 is applied in the apparatus or system for both digital signature operation, such as in Dilithium technology, and key encapsulation, such as in Saber technology. In this manner, the same polynomial multiplier is used for both protocols, thus meaning that there is no need for dedicated circuits to support modular reduction or other protocol-specific tasks.

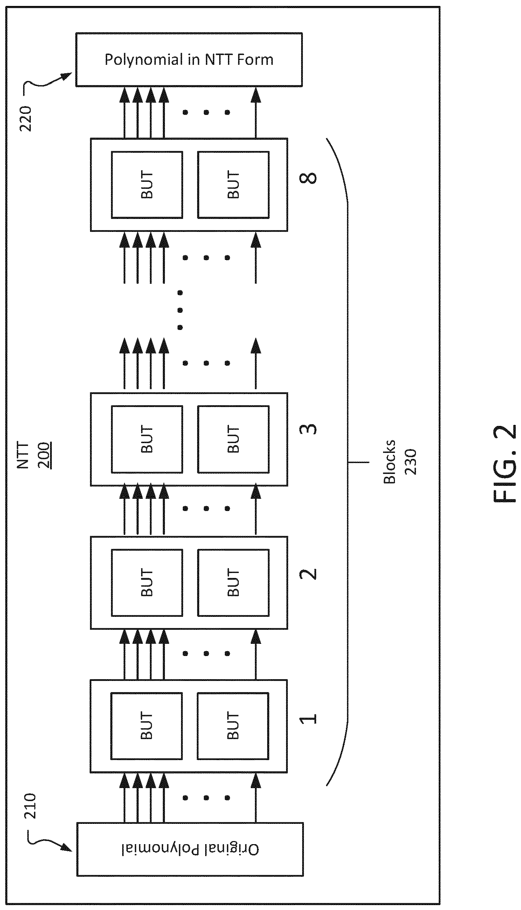

**FIG. 2** is an illustration of an NTT algorithm operation that may be utilized in both digital signature operation, such as in Dilithium technology, and key encapsulation operation, such as in Saber technology, according to some embodiments. At the core of the NTT algorithm is a butterfly operation that receives two coefficients and one constant value, and outputs the new values of the coefficients. Implementation of the butterfly operation commonly follows the Cooley-Tukey (CT) algorithm for the forward NTT and Gentleman-Sande (GS) algorithm for the inverse NTT. This is possible because the inverse NTT algorithm is very similar to the forward NTT one, with the main difference being the butterfly operation. The NTT operates on all coefficients of one polynomial several times. After eight repetitions (since polynomials in Dilithium have 256 coefficients) of the butterfly operation on all coefficients (with different pairs at each repetition), the NTT result is produced. Thus, the NTT function consists of blocks 230 of 128/n (where n is the number of butterfly units) cycles, where each cycle in a block contains independent operations, i.e. the result of one operation does not depend on the result of any other computation in the same block.

This operation is summarized in Figure 2. As illustrated, an NTT algorithm includes blocks 230 (shown as Block 1 through Block 8). In operation, the NTT algorithm is to receive an original polynomial 210 for processing by the blocks 230 to generate the resulting polynomial in NTT form 220 that may be utilized in a multiplication of polynomials.

In lattice KEMs for cryptographic operations, one secret polynomial is multiplied with another public polynomial. The multiplication consists of multiplying each coefficient of the secret polynomial with a respective element of the public polynomial. The polynomials may be degree-256 polynomials in a post quantum implementation. Multiplications between two such polynomials is the main compute intensive operation for key-generation, encapsulation, and decapsulation. The mathematical operation utilizes modular arithmetic, referring to a system of arithmetic for integers where numbers wrap around when reaching a certain value, called the modulus.

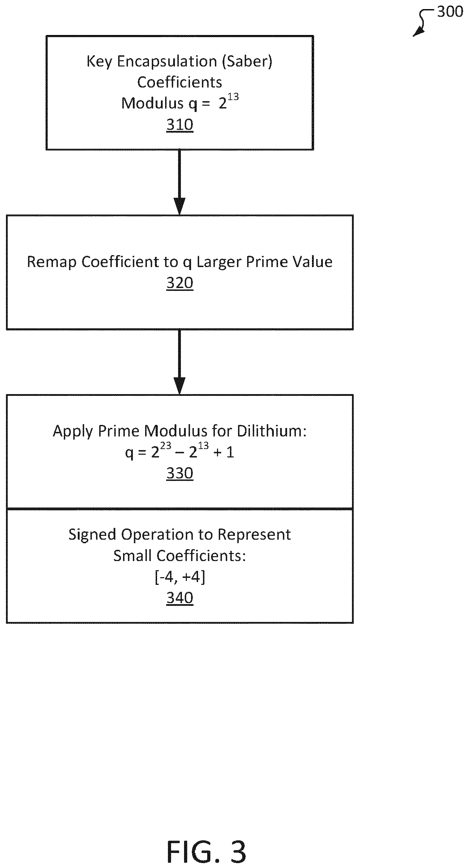

In some embodiments, an apparatus, system, or process is to utilize NTT-based multiplier circuitry for both digital signature generation, such as in Dilithium technology, and for key encapsulation, such as Saber. In some embodiments, to adopt an NTT-based multiplier (such as NTT-based multiplier 130 illustrated in FIG. 1) for Saber, the coefficients are remapped with a larger modulus to prevent errors, such as illustrated in FIG. 3.

**FIG. 3** is an illustration of remapping of coefficients for a Saber key encapsulation process for operation with an NTT-based multiplier, according to some embodiments. In some embodiments, a remapping operation 300 is applied to key encapsulation coefficients for Saber 310, which conventionally utilize a modulus $n = 2^{13}$, are to be remapped to a larger prime value 320. More specifically, to utilize an NTT-based multiplier to compute multiplication in Saber key encapsulation, the elements of the modulus $2^{13}$ are raised to a larger prime q' such that there exists a 2n-th root of unity in the integer ring $\mathbb{Z}_{q'}$.

To ensure the correctness of the operation, the prime q' is established as a value that is large enough that no modular reduction is needed. Generally, one would require q' to be larger than 34 bits, since the maximum absolute value of a coefficient in the product of two polynomials in SABER is given by $256 \times 2^{13} \times 2^{13}$ (= $2^{34}$), which thus would require 34 bits.

However, it is possible in an embodiment to provide a more efficient solution by considering that one operand, the secret polynomial, has a small coefficients between -4 and 4 in Saber. To implement this, signed operations are required to represent elements such as -4 with 3 bits (plus sign), rather than with 13 bits as q - 4. Thus, in this manner it is possible to represent the public polynomial coefficients as between $[-2^{12}, 2^{12} - 1]$. It is noted that this operation does not require any transformation action, but rather the coefficient bit values may be read as in two's complement format, rather than as positive numbers.

In some embodiments, this process allows for reducing the size of the prime q' because the maximum absolute value of a coefficient in the product of two polynomials is then $256 \times 4 \times 2^{12}$, However, is noted that note that $a \bmod 2^{13} \neq (a \bmod^{\pm} q')\bmod 2^{13}$ for any prime q'. Thus, because an embodiment is utilizing a centered modular reduction, it is desired that the prime q' satisfies $q'/2 > 256 \times 4 \times 2^{12}$.

However, the Dilithium prime $q = 2^{23} - 2^{13} + 1$ nearly satisfies this target, with $q/2 \approx (256 \times 4 \times 2^{12}) - 2^{12}$. There exist certain polynomials for which a modified algorithm will returns an incorrect result if the Dilithium modulus is used in Saber calculation. However, such polynomials are extremely rare, and thus do not greatly affect the accuracy of the calculation.

For example, a worst-case scenario may be assumed in which all the coefficients of $a^{\pm}$ have absolute value $2^{12}$. It may then be considered that the probability of a single coefficient of $s(x)$ being four is $2^{-8}$. In such operation, the computation only fails when a high number of coefficients is four or minus four. Thus, the probability of the secret polynomial being such a polynomial is mathematically negligible, and it can be estimated that such probability is less than $2^{-1778}$.

It is noted that the precise situation varies with different security level variants. u In FireSABER, the secret coefficients range between -3 and 3, thus the multiplication is always correct. In LightSABER, the secret coefficients fall in the set $[-5,5]$, so the probability of failure is higher than in SABER. However, assuming maximal coefficients in the public polynomial, a lower bound for the probability of failure is given by $2^{-1407}$.

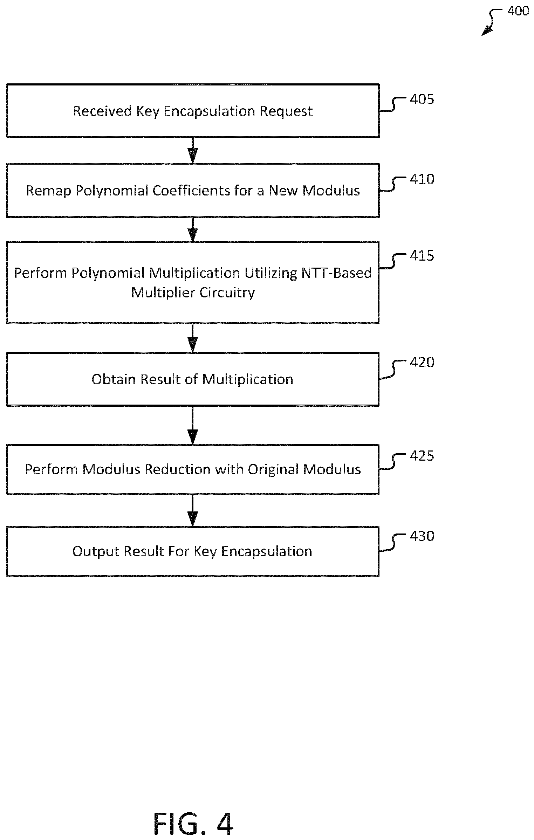

FIG. 4 is an illustration of a process for key encapsulation according to some embodiments. In some embodiments, a process 400 includes receiving a request for key encapsulation 405, wherein the key encapsulation technology includes a Saber technology for KEM in a post-quantum technology. The key encapsulation may include an operation utilizing an NTT-based multiplier to enable support for both Dilithium digital signature processing and Saber key encapsulation processing.

In some embodiments, the process proceeds with remapping of the polynomial coefficients for the key encapsulation for a new modulus 410, wherein the remapping of the coefficients may include the operations illustrated in FIG. 3 to apply the prime modulus for Dilithium and perform a signed operation to represent small coefficient values. Following the remapping, polynomial multiplication is performed utilizing NTT-based multiplier circuitry 415, wherein the circuitry may include the NTT-based multiplier circuitry 130 in an apparatus or system to support both digital signature and key encapsulation protocols in a hybrid or combined unit, as illustrated in FIG. 1.

In some embodiments, the process 400 may proceed with obtaining the result of the multiplication 420, performing modulus reduction with the original modulus for they key encapsulation protocol 425, and outputting the result for key encapsulation 430.

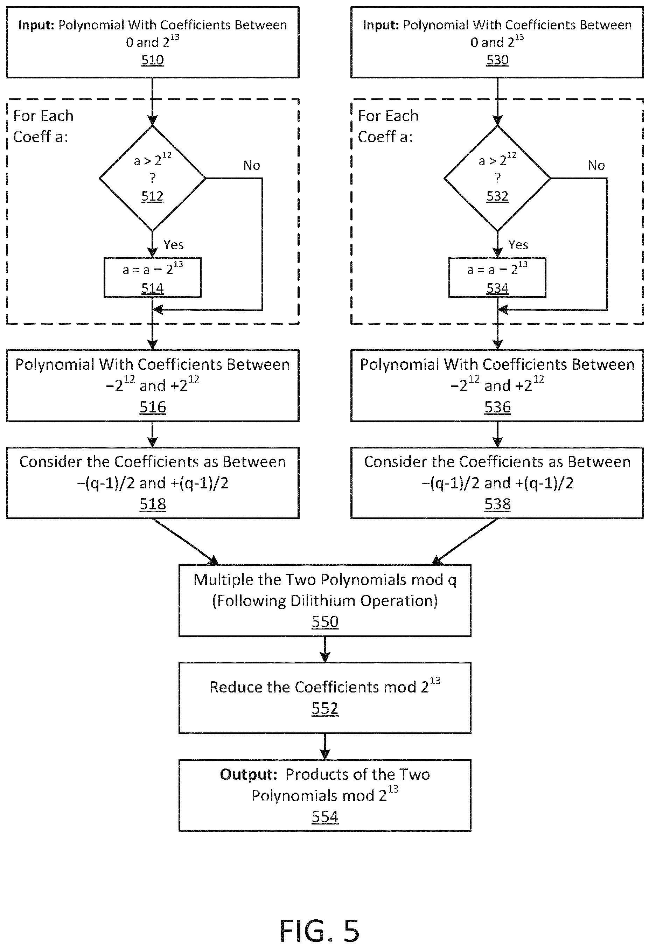

FIG. 5 is an illustration of details for a process for key encapsulation, according to some embodiments. In some embodiments, a process for key encapsulation, such as in Saber KEM technology, may include receiving an input two polynomials with coefficients between 0 and $2^{13}$ (510 and 530), wherein the polynomials may include a public polynomial and a private polynomial. For each coefficient a, the values are modified by determining whether a is greater than $2^{12}$ (512 and 532), and, if so, setting a to be a minus $2^{13}$ (514 and 536). The result is then two polynomials with coefficients that are between $-2^{12}$ and $+2^{12}$ (516 and 536). The coefficients may then be considered to between $-(q-1)/2$ and $+(q-1)/2$ (518 and 538).

In some embodiments, the two coefficients are then multiplied with modulus q, following the multiplication for Dilithium operation using an NTT-based multiplier 550. The result of the multiplication is then reduced utilizing with the original modulus $2^{13}$ (552), and thus generating the output of the two polynomials with modulus $2^{13}$ (554).

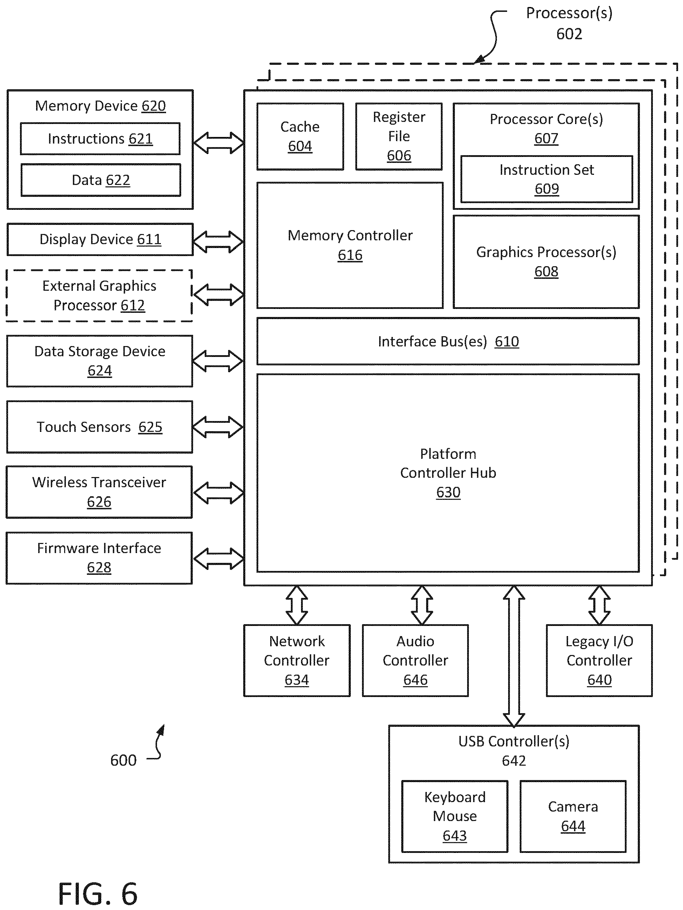

FIG. 6 illustrates an embodiment of an exemplary computing architecture for operations including combined post-quantum security utilizing redefined polynomial calculation, according to some embodiments. In various embodiments as described above, a computing architecture 600 may comprise or be implemented as part of an electronic device. In some embodiments, the computing architecture 600 may be representative, for example, of a computer system that implements one or more components of the operating environments described above. The computing architecture 600 may be utilized to provide combined security utilizing redefined polynomial calculation, such as described in FIGS. 1-5. In some embodiments, the computing architecture may include a combined technology to support digital signature and key encapsulation technologies, which may include NTT-based multiplier circuitry.

As used in this application, the terms "system" and "component" and "module" are intended to refer to a computer-related entity, either hardware, a combination of hardware and software, software, or software in execution, examples of which are provided by the exemplary computing architecture 600. For example, a component can be, but is not limited to being, a process running on a processor, a processor, a hard disk drive or solid state drive (SSD), multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 600 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 600.

As shown in FIG. 6, the computing architecture 600 includes one or more processors 602 and one or more graphics processors 608, and may be a single processor desktop system, a multiprocessor workstation system, or a server system having a large number of processors 602 or processor cores 607. In one embodiment, the system 600 is a processing platform incorporated within a system-on-a-chip (SoC or SOC) integrated circuit for use in mobile, handheld, or embedded devices.

An embodiment of system 600 can include, or be incorporated within, a server-based gaming platform, a game console, including a game and media console, a mobile gaming console, a handheld game console, or an online game console. In some embodiments system 600 is a mobile phone, smart phone, tablet computing device or mobile Internet device. Data processing system 600 can also include, couple with, or be integrated within a wearable device, such as a smart watch wearable device, smart eyewear device, augmented reality device, or virtual reality device. In some embodiments, data processing system 600 is a television or set top box device having one or more processors 602 and a graphical interface generated by one or more graphics processors 608.

In some embodiments, the one or more processors 602 each include one or more processor cores 607 to process instructions which, when executed, perform operations for system and user software. In some embodiments, each of the one or more processor cores 607 is configured to process a specific instruction set 609. In some embodiments, instruction set 609 may facilitate Complex Instruction Set Computing (CISC), Reduced Instruction Set Computing (RISC), or computing via a Very Long Instruction Word (VLIW). Multiple processor cores 607 may each process a different instruction set 609, which may include instructions to facilitate the emulation of other instruction sets. Processor core 607 may also include other processing devices, such a Digital Signal Processor (DSP).

In some embodiments, the processor 602 includes cache memory 604. Depending on the architecture, the processor 602 can have a single internal cache or multiple levels of internal cache. In some embodiments, the cache memory 604 is shared among various components of the processor 602. In some embodiments, the processor 602 also uses an external cache (e.g., a Level-3 (L3) cache or Last Level Cache (LLC)) (not shown), which may be shared among processor cores 607 using known cache coherency techniques. A register file 606 is additionally included in processor 602 which may include different types of registers for storing different types of data (e.g., integer registers, floating point registers, status registers, and an instruction pointer register). Some registers may be general-purpose registers, while other registers may be specific to the design of the processor 602.

In some embodiments, one or more processor(s) 602 are coupled with one or more interface bus(es) 610 to transmit communication signals such as address, data, or control signals between processor 602 and other components in the system. The interface bus 610, in one embodiment, can be a processor bus, such as a version of the Direct Media Interface (DMI) bus. However, processor buses are not limited to the DMI bus, and may include one or more Peripheral Component Interconnect buses (e.g., PCI, PCI Express), memory buses, or other types of interface buses. In one embodiment the processor(s) 602 include an integrated memory controller 616 and a platform controller hub 630. The memory controller 616 facilitates communication between a memory device and other components of the system 600, while the platform controller hub (PCH) 630 provides connections to I/O devices via a local I/O bus.

Memory device 620 can be a dynamic random-access memory (DRAM) device, a static random-access memory (SRAM) device, non-volatile memory device such as flash memory device or phase-change memory device, or some other memory device having suitable performance to serve as process memory. Memory device 620 may further include non-volatile memory elements for storage of firmware. In one embodiment the memory device 620 can operate as system memory for the system 600, to store data 622 and instructions 621 for use when the one or more processors 602 execute an application or process. Memory controller hub 616 also couples with an optional external graphics processor 612, which may communicate with the one or more graphics processors 608 in processors 602 to perform graphics and media operations. In some embodiments a display device 611 can connect to the processor(s) 602. The display device 611 can be one or more of an internal display device, as in a mobile electronic device or a laptop device, or an external display device attached via a display interface (e.g., DisplayPort, etc.). In one embodiment the display device 611 can be a head mounted display (HMD) such as a stereoscopic display device for use in virtual reality (VR) applications or augmented reality (AR) applications.

In some embodiments the platform controller hub 630 enables peripherals to connect to memory device 620 and processor 602 via a high-speed I/O bus. The I/O peripherals include, but are not limited to, an audio controller 646, a network controller 634, a firmware interface 628, a wireless transceiver 626, touch sensors 625, a data storage device 624 (e.g., hard disk drive, flash memory, etc.). The data storage device 624 can connect via a storage interface (e.g., SATA) or via a peripheral bus, such as a Peripheral Component Interconnect bus (e.g., PCI, PCI Express). The touch sensors 625 can include touch screen sensors, pressure sensors, or fingerprint sensors. The wireless transceiver 626 can be a Wi-Fi transceiver, a Bluetooth transceiver, or a mobile network transceiver such as a 3G, 4G, Long Term Evolution (LTE), or 5G transceiver. The firmware interface 628 enables communication with system firmware, and can be, for example, a unified extensible firmware interface (UEFI). The network controller 634 can enable a network connection to a wired network. In some embodiments, a high-performance network controller (not shown) couples with the interface bus 610. The audio controller 646, in one embodiment, is a multi-channel high definition audio controller. In one embodiment the system 600 includes an optional legacy I/O controller 640 for coupling legacy (e.g., Personal System 2 (PS/2)) devices to the system. The platform controller hub 630 can also connect to one or more Universal Serial Bus (USB) controllers 642 connect input devices, such as keyboard and mouse 643 combinations, a camera 644, or other USB input devices.

In the description above, for the purposes of explanation, numerous specific details are set forth in order to provide a thorough understanding of the described embodiments. It will be apparent, however, to one skilled in the art that embodiments may be practiced without some of these specific details. In other instances, well-known structures and devices are shown in block diagram form. There may be intermediate structure between illustrated components. The components described or illustrated herein may have additional inputs or outputs that are not illustrated or described.

Various embodiments may include various processes. These processes may be performed by hardware components or may be embodied in computer program or machine-executable instructions, which may be used to cause a general-purpose or special-purpose processor or logic circuits programmed with the instructions to perform the processes. Alternatively, the processes may be performed by a combination of hardware and software.

Portions of various embodiments may be provided as a computer program product, which may include a computer-readable medium having stored thereon computer program instructions, which may be used to program a computer (or other electronic devices) for execution by one or more processors to perform a process according to certain embodiments. The computer-readable medium may include, but is not limited to, magnetic disks, optical disks, read-only memory (ROM), random access memory (RAM), erasable programmable read-only memory (EPROM), electrically-erasable programmable read-only memory (EEPROM), magnetic or optical cards, flash memory, or other type of computer-readable medium suitable for storing electronic instructions. Moreover, embodiments may also be downloaded as a computer program product, wherein the program may be transferred from a remote computer to a requesting computer.

Many of the methods are described in their most basic form, but processes can be added to or deleted from any of the methods and information can be added or subtracted from any of the described messages without departing from the basic scope of the present embodiments. It will be apparent to those skilled in the art that many further modifications and adaptations can be made. The particular embodiments are not provided to limit the concept but to illustrate it. The scope of the embodiments is not to be determined by the specific examples provided above but only by the claims below.

If it is said that an element "A" is coupled to or with element "B," element A may be directly coupled to element B or be indirectly coupled through, for example, element C. When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is only one of the described elements.

An embodiment is an implementation or example. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments, various features are sometimes grouped together in a single embodiment, figure, or description thereof for the purpose of streamlining the disclosure and aiding in the understanding of one or more of the various novel aspects. This method of disclosure, however, is not to be interpreted as reflecting an intention that the claimed embodiments requires more features than are expressly recited in each claim. Rather, as the following claims reflect, novel aspects lie in less than all features of a single foregoing disclosed embodiment. Thus, the claims are hereby expressly incorporated into this description, with each claim standing on its own as a separate embodiment.

The foregoing description and drawings are to be regarded in an illustrative rather than a restrictive sense. Persons skilled in the art will understand that various modifications and changes may be made to the embodiments described herein without departing from the broader spirit and scope of the features set forth in the appended claims.

The following Examples pertain to certain embodiments:

In Example 1, an apparatus includes a first circuit for key encapsulation operation; a second circuit for digital signature operation; and a NTT (Number Theoretic Transform) multiplier circuit, wherein the NTT multiplier circuit provides for polynomial multiplication for both the first circuit and the second circuit, wherein the apparatus is to remap coefficients of polynomials for the first circuit to a prime modulus for the second circuit, and perform polynomial multiplication for the first circuit utilizing the remapped coefficients of the polynomials for the first circuit.

In Example 2, remapping the coefficients includes a signed operation to represent the coefficients for the first circuit.

In Example 3, the coefficients for the first circuit are represented in two's complement format.

In Example 4, the polynomial multiplication for the first circuit and the second circuit includes multiplication of a private polynomial with a public polynomial.

In Example 5, performing polynomial multiplication for the first circuit further includes reducing a result of a calculation by an original modulus for the first circuit.

In Example 6, the first circuit is a Saber key encapsulation circuit including a non-prime modulus $n = 2^{13}$.

In Example 7, the second circuit is a Dilithium digital signature circuit including a 23-bit prime modulus

of $q = 2^{23} - 2^{13} + 1$.

In Example 8, a method includes remapping coefficients of polynomials for a first operation for key encapsulation processing to a prime modulus for a second operation for digital signature processing, and performing polynomial multiplication for the first operation utilizing the remapped coefficients of the polynomials for the first operation, wherein performing polynomial multiplication for the first operation includes use of a NTT (Number Theoretic Transform) multiplier circuit, wherein the NTT multiplier circuit provides for polynomial multiplication for both the first operation and the second operation.

In Example 9, remapping the coefficients includes a signed operation to represent the coefficients for the first operation.

In Example 10, the coefficients for the first operation are represented in two's complement format.

In Example 11, performing polynomial multiplication for the first operation and the second operation includes performing multiplication of a private polynomial with a public polynomial.

In Example 12, wherein performing polynomial multiplication for the first operation further includes reducing a result of a calculation by an original modulus for the first operation.

In Example 13, the first operation is a Dilithium digital signature operation including a 23-bit prime modulus of $q = 2^{23} - 2^{13} + 1$.

In Example 14, the second operation is a Saber key encapsulation operation including a non-prime modulus $n = 2^{13}$.

In Example 15, one or more non-transitory computer-readable storage mediums having stored thereon executable computer program instructions that, when executed by one or more processors, cause the one or more processors to perform operations including remapping coefficients of polynomials for a first operation for key encapsulation processing to a prime modulus for a second operation for digital signature processing; and performing polynomial multiplication for the first operation utilizing the remapped coefficients of the polynomials for the first operation, wherein performing polynomial multiplication for the first operation includes use of a NTT (Number Theoretic Transform) multiplier circuit, wherein the NTT multiplier circuit provides for polynomial multiplication for both the first operation and the second operation.

In Example 16, remapping the coefficients includes a signed operation to represent the coefficients for the first operation.

In Example 17, the coefficients for the first operation are represented in two's complement format.

In Example 18, performing polynomial multiplication for the first operation and the second operation includes performing multiplication of a private polynomial with a public polynomial.

In Example 19, wherein performing polynomial multiplication for the first operation further includes reducing a result of a calculation by an original modulus for the first operation.

In Example 20, the first operation is a Dilithium digital signature operation including a 23-bit prime modulus of $q = 2^{23} - 2^{13} + 1$ and the second operation is a Saber key encapsulation operation including a non-prime modulus $n = 2^{13}$.

In Example 21, a system includes one or more processors; a memory for storage of data; a first circuit for key encapsulation operation; a second circuit for digital signature operation; and a NTT (Number Theoretic Transform) multiplier circuit, wherein the NTT multiplier circuit provides for polynomial multiplication for both the first circuit and the second circuit, wherein the apparatus is to remap coefficients of polynomials for the first circuit to a prime modulus for the second circuit, and perform polynomial multiplication for the first circuit utilizing the remapped coefficients of the polynomials for the first circuit.

In Example 22, remapping the coefficients includes a signed operation to represent the coefficients for the first circuit.

In Example 23, the coefficients for the first circuit are represented in two's complement format.

In Example 24, the polynomial multiplication for the first circuit and the second circuit includes multiplication of a private polynomial with a public polynomial.

In Example 25, performing polynomial multiplication for the first circuit further includes reducing a result of a calculation by an original modulus for the first circuit.

In Example 26, the first circuit is a Saber key encapsulation circuit including a non-prime modulus $n = 2^{13}$.

In Example 27, the second circuit is a Dilithium digital signature circuit including a 23-bit prime modulus of $q = 2^{23} - 2^{13} + 1$.

In Example 28, an apparatus includes means for remapping coefficients of polynomials for a first operation for key encapsulation processing to a prime modulus for a second operation for digital signature processing; and means for performing polynomial multiplication for the first operation utilizing the remapped coefficients of the polynomials for the first operation, wherein the means for performing polynomial multiplication for the first operation includes use of a NTT (Number Theoretic Transform) multiplier circuit, wherein the NTT multiplier circuit provides for polynomial multiplication for both the first operation and the second operation.

In Example 29, the means for remapping the coefficients includes a signed operation to represent the coefficients for the first operation.

In Example 30, the coefficients for the first operation are represented in two's complement format.

In Example 31, the means for performing polynomial multiplication for the first operation and the second operation includes means for performing multiplication of a private polynomial with a public polynomial.

In Example 32, the means for performing polynomial multiplication for the first operation further includes means for reducing a result of a calculation by an original modulus for the first operation.

In Example 33, the first operation is a Dilithium digital signature operation including a 23-bit prime modulus of $q = 2^{23} - 2^{13} + 1$ and the second operation is a Saber key encapsulation operation including a non-prime modulus $n = 2^{13}$.

In the description above, for the purposes of explanation, numerous specific details are set forth in order to provide a thorough understanding of the described embodiments. It will be apparent, however, to one skilled in the art that embodiments may be practiced without some of these specific details. In other instances, well-known structures and devices are shown in block diagram form. There may be intermediate structure between illustrated components. The components described or illustrated herein may have additional inputs or outputs that are not illustrated or described.

Various embodiments may include various processes. These processes may be performed by hardware components or may be embodied in computer program or machine-executable instructions, which may be used to cause a general-purpose or special-purpose processor or logic circuits programmed with the instructions to perform the processes. Alternatively, the processes may be performed by a combination of hardware and software.

Portions of various embodiments may be provided as a computer program product, which may include a computer-readable medium having stored thereon computer program instructions, which may be used to program a computer (or other electronic devices) for execution by one or more processors to perform a process according to certain embodiments. The computer-readable medium may include, but is not limited to, magnetic disks, optical disks, read-only memory (ROM), random access memory (RAM), erasable programmable read-only memory (EPROM), electrically-erasable programmable read-only memory (EEPROM), magnetic or optical cards, flash memory, or other type of computer-readable medium suitable for storing electronic instructions. Moreover, embodiments may also be downloaded as a computer program product, wherein the program may be transferred from a remote computer to a requesting computer.

Many of the methods are described in their most basic form, but processes can be added to or deleted from any of the methods and information can be added or subtracted from any of the described messages without departing from the basic scope of the present embodiments. It will be apparent to those skilled in the art that many further modifications and adaptations can be made. The particular embodiments are not provided to limit the concept but to illustrate it. The scope of the embodiments is not to be determined by the specific examples provided above but only by the claims below.

If it is said that an element "A" is coupled to or with element "B," element A may be directly coupled to element B or be indirectly coupled through, for example, element C. When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is only one of the described elements.

An embodiment is an implementation or example. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments, various features are sometimes grouped together in a single embodiment, figure, or description thereof for the purpose of streamlining the disclosure and aiding in the understanding of one or more of the various novel aspects. This method of disclosure, however, is not to be interpreted as reflecting an intention that the claimed embodiments requires more features than are expressly recited in each claim. Rather, as the following claims reflect, novel aspects lie in less than all features of a single foregoing disclosed embodiment. Thus, the claims are hereby expressly incorporated into this description, with each claim standing on its own as a separate embodiment.

The foregoing description and drawings are to be regarded in an illustrative rather than a restrictive sense. Persons skilled in the art will understand that various modifications and changes may be made to the embodiments described herein without departing from the broader spirit and scope of the features set forth in the appended claims.

## Claims

1. An apparatus comprising:

a first circuit for key encapsulation operation;
a second circuit for digital signature operation; and
a NTT (Number Theoretic Transform) multiplier circuit, wherein the NTT multiplier circuit provides for polynomial multiplication for both the first circuit and the second circuit;
wherein the apparatus is to:

remap coefficients of polynomials for the first circuit to a prime modulus for the second circuit, and
perform polynomial multiplication for the first circuit utilizing the remapped coefficients of the polynomials for the first circuit.

2. The apparatus of claim 1, wherein remapping the coefficients includes a signed operation to represent the coefficients for the first circuit.

3. The apparatus of claim 2, wherein the coefficients for the first circuit are represented in two's complement format.

4. The apparatus of any of claims 1 to 3, wherein the polynomial multiplication for the first circuit and the second circuit includes multiplication of a private polynomial with a public polynomial.

5. The apparatus of any of claims 1 to 4, wherein performing polynomial multiplication for the first circuit further includes reducing a result of a calculation by an original modulus for the first circuit.

6. The apparatus of any of claims 1 to 5, wherein the first circuit is a Saber key encapsulation circuit including a non-prime modulus $n = 2^{13}$.

7. The apparatus of any of claims 1 to 6, wherein the second circuit is a Crystals-Dilithium digital signature circuit including a 23-bit prime modulus of $q = 2^{23} - 2^{13} + 1$.

8. A method comprising:

remapping coefficients of polynomials for a first operation for key encapsulation processing to a prime modulus for a second operation for digital signature processing; and
performing polynomial multiplication for the first operation utilizing the remapped coefficients of the polynomials for the first operation;
wherein performing polynomial multiplication for the first operation includes use of a NTT (Number Theoretic Transform) multiplier circuit, wherein the NTT multiplier circuit provides for polynomial multiplication for both the first operation and the second operation.

9. The method of claim 8, wherein remapping the coefficients includes a signed operation to represent the coefficients for the first operation.

10. The method of claim 9, wherein the coefficients for the first operation are represented in two's complement format.

11. The method of any of claims 8 to 10, wherein performing polynomial multiplication for the first operation and the second operation includes performing multiplication of a private polynomial with a public polynomial.

12. The method of any of claims 8 to 11, wherein performing polynomial multiplication for the first operation further includes reducing a result of a calculation by an original modulus for the first operation.

13. The method of any of claims 8 to 12, wherein the first operation is a Saber key encapsulation operation including a non-prime modulus $n = 2^{13}$.

14. The method of any of claims 8 to 13, wherein the second operation is a Dilithium digital signature operation including a 23-bit prime modulus of $q = 2^{23} - 2^{13} + 1$.

15. Machine-readable storage including machine-readable instructions that, when executed, cause the processor to implement a method as claimed in any preceding claim.

System or Apparatus
100

Digital Signature
(Dilithium-Lattice)
110

Key Encapsulation
(Saber)
120

NTT-Based Multiplier
Circuitry
130

Digital Signature
Output
140

Key Encapsulation
Output
145

FIG. 1

FIG. 2

300

```
┌─────────────────────────────────┐
│   Key Encapsulation (Saber)     │
│         Coefficients            │
│     Modulus q =  2^13           │
│            310                  │
└─────────────────────────────────┘
                │
                ▼
┌─────────────────────────────────┐
│                                 │
│  Remap Coefficient to q Larger  │
│          Prime Value            │
│            320                  │
│                                 │
└─────────────────────────────────┘
                │
                ▼
┌─────────────────────────────────┐
│  Apply Prime Modulus for        │
│         Dilithium:              │
│    q = 2^23 − 2^13 + 1          │
│            330                  │
├─────────────────────────────────┤
│  Signed Operation to Represent  │
│      Small Coefficients:        │
│          [-4, +4]               │
│            340                  │
└─────────────────────────────────┘
```

# FIG. 3

```
                                                              ⌐ 400
                                                            ƒ

┌─────────────────────────────────────────┐
│     Received Key Encapsulation Request   │ ⌐ 405
└─────────────────────────────────────────┘
                     │
                     ▼
┌─────────────────────────────────────────┐
│   Remap Polynomial Coefficients for a    │ ⌐ 410
│              New Modulus                  │
└─────────────────────────────────────────┘
                     │
                     ▼
┌─────────────────────────────────────────┐
│ Perform Polynomial Multiplication        │ ⌐ 415
│ Utilizing NTT-Based Multiplier Circuitry │
└─────────────────────────────────────────┘
                     │
                     ▼
┌─────────────────────────────────────────┐
│       Obtain Result of Multiplication    │ ⌐ 420
└─────────────────────────────────────────┘
                     │
                     ▼
┌─────────────────────────────────────────┐
│ Perform Modulus Reduction with Original  │ ⌐ 425
│                Modulus                    │
└─────────────────────────────────────────┘
                     │
                     ▼
┌─────────────────────────────────────────┐
│      Output Result For Key Encapsulation │ ⌐ 430
└─────────────────────────────────────────┘
```

# FIG. 4

**Input:** Polynomial With Coefficients Between 0 and $2^{13}$
**510**

For Each Coeff a:

$a > 2^{12}$ ?
**512**

No

Yes

$a = a - 2^{13}$
**514**

Polynomial With Coefficients Between $-2^{12}$ and $+2^{12}$
**516**

Consider the Coefficients as Between $-(q-1)/2$ and $+(q-1)/2$
**518**

**Input:** Polynomial With Coefficients Between 0 and $2^{13}$
**530**

For Each Coeff a:

$a > 2^{12}$ ?
**532**

No

Yes

$a = a - 2^{13}$
**534**

Polynomial With Coefficients Between $-2^{12}$ and $+2^{12}$
**536**

Consider the Coefficients as Between $-(q-1)/2$ and $+(q-1)/2$
**538**

Multiple the Two Polynomials mod q (Following Dilithium Operation)
**550**

Reduce the Coefficients mod $2^{13}$
**552**

**Output:** Products of the Two Polynomials mod $2^{13}$
**554**

FIG. 5

Processor(s)
602

Memory Device 620

Instructions 621

Data 622

Display Device 611

External Graphics
Processor 612

Data Storage Device
624

Touch Sensors 625

Wireless Transceiver
626

Firmware Interface
628

Cache
604

Register
File
606

Processor Core(s)
607

Instruction Set
609

Memory Controller
616

Graphics Processor(s)
608

Interface Bus(es) 610

Platform
Controller Hub
630

600

Network
Controller
634

Audio
Controller
646

Legacy I/O
Controller
640

USB Controller(s)
642

Keyboard
Mouse
643

Camera
644

FIG. 6

Europäisches
Patentamt

European
Patent Office

Office européen
des brevets

## EUROPEAN SEARCH REPORT

Application Number

EP 22 18 4609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIM FRITZMANN ET AL: "Masked Accelerators and Instruction Set Extensions for Post-Quantum Cryptography", IACR, INTERNATIONAL ASSOCIATION FOR CRYPTOLOGIC RESEARCH , vol. 20210415:201027 15 April 2021 (2021-04-15), pages 1-47, XP061058976, Retrieved from the Internet: URL:https://eprint.iacr.org/2021/479.pdf [retrieved on 2021-04-15] * section Contributions * * sections 1.3, 3 * * figure 6; table 1 * | 1-15 | INV. H04L9/08 H04L9/30 H04L9/32 |
| A | CHI-MING MARVIN CHUNG ET AL: "NTT Multiplication for NTT-unfriendly Rings", IACR, INTERNATIONAL ASSOCIATION FOR CRYPTOLOGIC RESEARCH , vol. 20201110:125732 9 November 2020 (2020-11-09), pages 1-30, XP061041661, Retrieved from the Internet: URL:http://eprint.iacr.org/2020/1397.pdf [retrieved on 2020-11-09] * section 2.4.6 * | 1-15 | |

TECHNICAL FIELDS SEARCHED (IPC)

H04L

The present search report has been drawn up for all claims

| Place of search | Date of completion of the search | Examiner |
|---|---|---|
| Munich | 19 December 2022 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)